Europäisches Patentamt

**European Patent Office** (11) Publication number: **0 068 885**

Office européen des brevets A1

(19)

## (12) EUROPEAN PATENT APPLICATION

(21) Application number: **82303402.0**

(22) Date of filing: **29.06.82**

(51) Int. Cl.³: **A 47 G 1/10, A 47 G 1/06**

(30) Priority: **30.06.81 NZ 197569**

(43) Date of publication of application: **05.01.83**
**Bulletin 83/1**

(84) Designated Contracting States: **AT BE CH DE FR IT LI**
**LU NL SE**

(71) Applicant: **Worrallo, Anthony Charles, 15 Sprott Road,**
**Auckland 5 (NZ)**

(72) Inventor: **Worrallo, Anthony Charles, 15 Sprott Road,**
**Auckland 5 (NZ)**

(74) Representative: **Robinson, Anthony John Metcalf et al,**
**Kilburn & Strode 30 John Street, London, WC1N 2DD**
**(GB)**

(54) **Picture frame.**

(57) A picture frame which is composed of a plurality of
frame members (26) and a plurality of corner portions (10).
Each corner portion comprises a block (12) and two arms
(14). The blocks (12) are substantially rectangular in form
and each has a slot (16) in one corner thereof whereby the
slot opens through two adjacent faces of the block. The
arms (14) are received in the open ends of the members (26)
which, in cross-section, are of square U-shape. Once a
corner portion (10) has been attached to a member (26), the
slot (16) thereof forms an extension of the hollow interior of
the member. The two major faces of each block (12) are
different in appearance to one another and the major faces
of the members (26) are also different in appearance to one
another. The corner pieces (10) can be reversed with
respect to the frame members (26) so that the appearance of
the frame can be varied.

# PICTURE FRAME

The present invention relates to constructions for use in forming frames for pictures.  Such constructions comprise a picture frame having a front surface and a rear surface, the construction comprising an elongate frame member and a corner piece for connecting the frame member to another frame member, the frame member and the corner piece each having first and second exterior faces.

Picture frames are known which comprise four elongate frame members and corner pieces for joining the frame members to one another.  Examples of such frames are found in United States Patent Specifications 4136470 and 3965601.

It is an object of the present invention to provide a picture frame comprising frame members and corner pieces in which the corner pieces and frame members can be reversed with respect to one another so as to provide the picture frame with a number of different appearances.

According to the present invention a construction for use in forming a picture frame is characterised by the corner piece comprising a block with first and second arms protruding therefrom at an angle to one another, the block having a slot in one corner region thereof, the first face of the frame member being different in appearance to the second face thereof and the first face of the corner piece being different in appearance to the second face thereof; the frame member including two spaced longitudinal flanges defining a hollow interior, the free edges of the flanges bounding an elongate mouth which

0068885

provides access to the hollow interior of the frame member, the hollow interior serving to receive either the first arm of the second arm with the slot forming an extension of the hollow interior of the frame member, and with the corner piece orientated with respect to the frame member so that either the first faces both form part of one of the surfaces of the frame or one of the first faces and one of the second faces form part of one of the surfaces of the frame.

To enable a rectangular frame to be crated, the arms are preferable at right angles to one another.  Each arm is preferably non-symmetrical in cross section and part of the hollow interior of the frame member is of corresponding shape whereby each arm can only be inserted into the said part of the hollow interior in one orientation.  In the preferred form, each arm is T-shaped in cross section and the said part is correspondingly shaped.

The frmae member may comprise a web and two ribs, the two flanges being parallel to one another and protruding from the same side the web, the two ribs protruding towards one another from those surfaces of the flanges which face one another, there being a gap between the ribs, and the web, ribs and flanges bounding the T-shaped part of said hollow interior.

It is preferred that said block be in the form of a right parallelepiped, and that said slot open through two adjacent faces of said block.

The invention may be carried into practice in various ways and one embodiment will now be described by way of example with reference to the accompanying drawings in which:-

Figure 1 is a side elevation of a corner piece,

Figure 2 is a top plan view of the corner piece of Figure 1,

Figure 3 is a front elevation of the corner piece of Figure 1,

Figure 4 is a section, to a larger scale, through a frame member, and

Figure 5 is a side elevation showing two corner pieces of the form shown in Figures 1 to 3 attached to a frame member of the form shown in Figure 4.

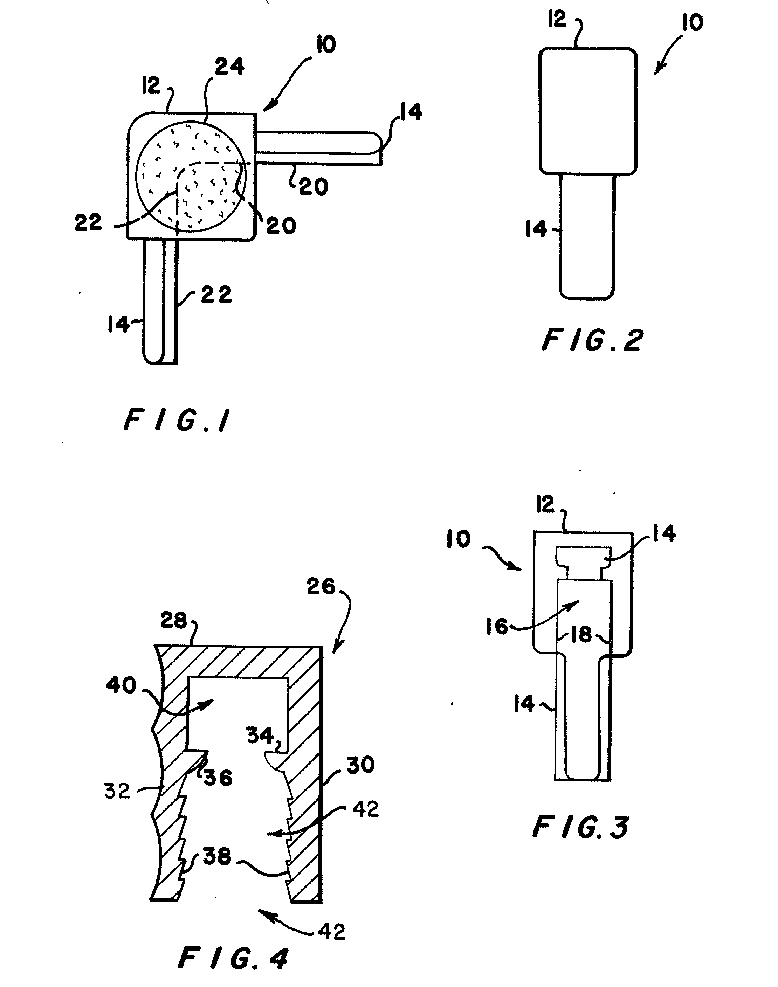

Referring firstly to Figures 1 to 3, the corner piece 10 illustrated can be die cast in aluminium or other metal or can be injection moulded in synthetic plastics material.  The corner piece comprises a block 12 of generally parallelopedic form and two arms 14 which protrude from the block 12 and lie at right angles to one another.  Each arm 14, in end elevation (see Figure 3), is generally T-shaped in form having a 'cross-bar' and an 'upright' intersecting the cross bar.  The block 12 is formed with a slot 16 the front and rear faces 18 of which are generally rectangular and the other two faces of which are extensions of the bottom face 20 of the horizontal arm 14 and of the vertical face 22 of the vertical arm 14.

The face of the block 12 which is visible

in Figure 1 is formed with a patterned, circular area 24. In the illustrated embodiment the patterned area is formed with a plurality of raised nodules thereby to obtain a stipled effect. The other face of the block 12 can be plain. It will be understood that the other face of the block could also be patterned if desired but with a pattern different to the visible face. Any arrangement of ridges, dots, depressions, curves etc. can be provided to obtain the desired appearance.

The elongate frame member 26 of Figure 4 is in the form of an aluminium or synthetic plastics material extrusion. The member comprises a web 28 and two flanges 30 and 32, the web and flanges together defining a channel of substantially square U-formation. The member 26 thus has a hollow interior. The outer face of the flange 30 is plain and the outer face of the flange 32 is formed with longitudinally extending alternate ridges and shallow depressions, the adjacent ridges and depressions merging smoothly with one another.

Internally of the member 26 there are two ribs 34, 36 which protrude towards one another from those surfaces of the flanges 30, 32 which face one another. There is a gap between the ribs and a series of serrations 38 between the ribs and the free edges of the flanges 30, 32. The serrations are not essential and can be omitted. The web 28, the upper portions of the flanges 30 and 32 and the ribs 34 and 36 define a T-shaped part 40 of said hollow interior which part corresponds in shape to the cross sectional shape of the arms 14. The free edges of the flanges 30 and 32 define an elongate mouth 42 which provides access to the interior of the member 26.

Four members 26 together with four corner pieces 10 together form a rectangular frame for a picture, photograph, or other work to be displayed. For the sake of simplicity, in the present specification, the work to be displayed will simply be referred to as a 'picture'.

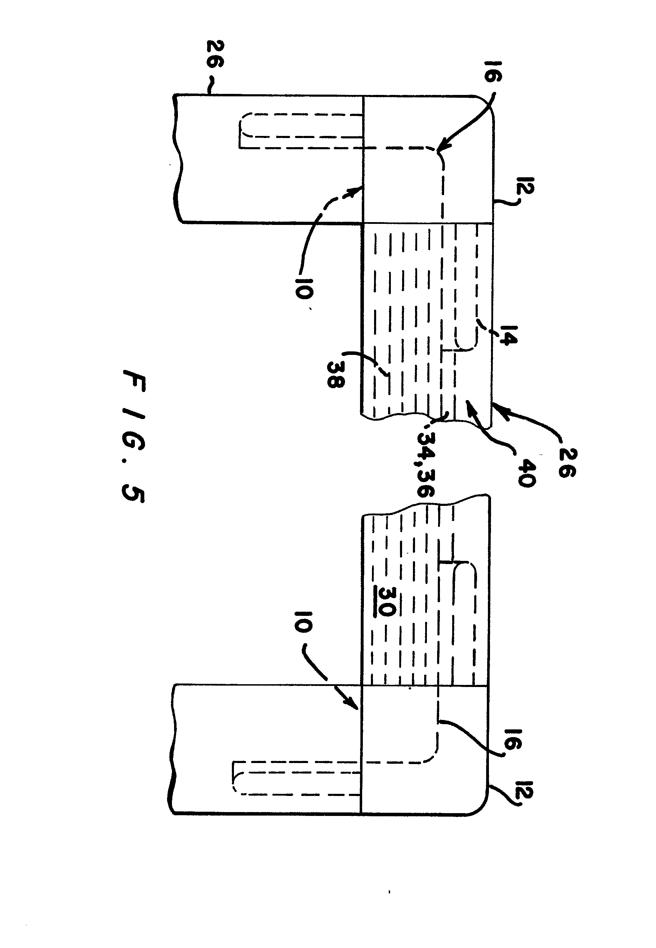

A picture frame is constructed by pushing the arm 14 of one corner piece 10 into one end of the T-shaped part 40 of the hollow interior of one of the members 26 (see Figure 5). This member 26 is referred to subsequently as the intermediate member. The 'cross-bar' of the T-shaped arm 14 enters the squarish portion of the part 40 with the 'upright' of the arm 14 between the ribs 34 and 36. Because the arm 14 is non-symmetrical in cross-section, it can only be inserted in the opening 40 in one position of orientation.

The slot 16 in the block 12 forms a short extension of the hollow interior of the intermediate member 26. The outer faces of the flanges 30 and 32 come into register with the outer faces of the block 12. A further corner piece 10 is mounted at the other end of the intermediate member 26 (see also Figure 5) and thereafter two side members 26 are mounted on the downwardly protruding arms 14 of the two corner pieces 10. In Figure 5 the internal detail of the intermediate member 26 only has been shown and not the corresponding detail of the side members 26.

The picture to be displayed, together if desired with a protective, transparent sheet (e.g. a glass sheet) and a thicker backing sheet is slid into the three-sided, partly constructed frame. The edge portions of the picture, backing sheet and transparent sheet slide into the edge zones of the hollow interior of the two side members 26 of the partly completed frame and along these edge zones until their leading edges enter the hollow interior of the intermediate frame member 26 through its mouth 42. It will be understood that the edge zones are bounded by the serrated portions of the flanges 30, 32. The corners of the picture, transparent sheet and backing sheet enter the slots 16 of the two corner pieces 10. Thereafter, the final two corner pieces 10 and the fourth frame member 26 are attached to complete the frame. The four corners of the picture, backing sheet and transparent sheet are each in one of the slots 16 and the four edges of the picture, backing sheet and transparent sheet are in the edge zones of the hollow interiors of the members 26.

It will be understood that because the outer faces of the flanges 30 and 32 are different in appearance (for example one plain and one ridged in the example given) and because one face of each block is different to the other face of each block, the appearance of the front surface of the picture frame is substantially different from the appearance of the rear surface of the frame. For example, the circular areas 24 of the blocks 12 and the plain faces of the flanges 30 can be on the same side of the frame. Alternatively, the ridged faces of the flanges 32 and the patterned faces of the blocks 12 can be on the same side of the frame. Because the corner pieces 10 and the members 26 are symmetrical (apart from their decorative features) about a medial plane of the frame, the corner pieces 10 can be turned around with respect to the frame members 26 thus increasing the possible number of combinations of decorative features.

7.

0068885

CLAIMS

1. A construction for use in forming a picture frame having a front surface and a rear surface, the construction comprising an elongate frame member (26) and a corner piece (10) for connecting the frame member (26) to another frame member, the frame member (26) and the corner piece each having first and second exterior faces characterised by the corner piece (10) comprising a block (12) with first and second arms (14) protruding therefrom, at an angle to one another, the block (12) having a slot (16) in one corner region thereof, the first face of the frame member being different in appearance to the second face thereof and the first face of the corner piece being different in appearance to the second face thereof; the frame member (26) including two spaced longitudinal falnges (30,32) defining a hollow interior (40) the free edges of the flanges (30,32) bounding an elongate mouth (42) which provides access to the hollow interior (40) of the frame member (26), the hollow interior (40) serving to receive either the first arm or the second arm with the slot (16) forming an extension of the hollow interior (40) of the frame member, and with the corner piece (10) orientated with respect to the frame member (26) so that either the first faces both form part of one of the surfaces of the frame or one of the first faces and one of the second faces form part of one of the surfaces of the frame.

2. A construction as claimed in Claim 1 characterised in that the arms (14) are at right angles to one another.

3.    A construction as claimed in Claim 1 or Claim 2
characterised in that each arm (14) is non-symmetrical
in cross section and part of the hollow interior (40)
of the frame member (26) is of corresponding shape whereby
each arm (14) can only be inserted into the part of the
hollow interior (40) in one orientation.

4.    A construction as claimed in Claim 3 characterised in that each arm is T-shaped in cross section and
the said part of the hollow interior (40) is correspondingly
shaped.

5.    A construction as claimed in Claim 4
characterised in that the frame member (26) comprises a
web (28) connecting the two flanges (30,32), the two
flanges being parallel to one another and protruding from
the same side of the web, and two ribs (34,36) protruding
towards one another from those surfaces of the flanges
(30,32) which face one another, there being a gap between
the ribs (34,36) and the web (28), ribs (34,36) and flanges
(30,32) to define the T-shaped part of the hollow
interior (40).

6.    A construction as claimed in Claim 4
characterised in that the frame member (26) comprises a
web (28) from which the flanges (30,32) protrude, the
flanges (30,32) being parallel to one another and being
on the same side of the web (28) as one another, the frame
member (26) further comprising two ribs (34,36) protruding
towards one another from those surfaces of the flanges

(30,32) which face one another, the ribs (34,36) being between the web (28) and the free edges of the flanges and there being a gap between the ribs, the slot (16) in the block (12) forming an extension of that portion of the hollow interior of the frame member (26) which lies between the mouth (42) and the ribs (34,36) and the said portion of the hollow interior (40) being defined by the ribs (34,36), the portions of the flanges (30,32) between the ribs (34,36) and the web (28).

7.    A construction as claimed in any preceding claim characterised in that the block (12) is in the form of a right parallelepiped, and the slot (16) opens through two adjacent faces of the block.

8.    A construction as claimed in any preceding claim characterised by a second frame member (24), the arms (14) of the corner piece (10) being in the hollow interiors (40) of the two frame members, the slot (16) forming extensions of the hollow interiors (40) of the frame members (26).

9.    A picture frame characterised in that it comprises a plurality of constructions as claimed in any of claims 1 to 7, with the arms (14) of each corner piece (10) extending into the hollow interiors (40) of the frame members (26) to form a location for a picture defined by the slots (16) and the hollow interiors (40).

0068885

FIG.1

FIG.2

FIG.3

FIG.4

FIG. 5

0068885

European Patent
Office

**EUROPEAN SEARCH REPORT**

Application number

EP 82 30 3402

## DOCUMENTS CONSIDERED TO BE RELEVANT

| Category | Citation of document with indication. where appropriate, of relevant passages | Relevant to claim | CLASSIFICATION OF THE APPLICATION (Int. Cl. ³) |
|---|---|---|---|
| X | CH-A- 125 923 (DREYER) *Page 1, left-hand column, paragraph 1, right-hand column, 9 last lines; page 2, left-hand column, lines 1-14,17-19,21-23; claim; figures 7,9* | 1-9 | A 47 G 1/10 A 47 G 1/06 |
| X | GB-A-1 290 579 (WOOD) *Page 1, lines 32-58,90-92; page 2, lines 1-53; claims 1-10; figures 1,4* | 1-9 | |
| Y | US-A-3 936 968 (GILBERT) *Column 6, lines 4-18; figures 15-16* | 1,5,6, 8,9 | |
| D,A | US-A-4 136 470 (BARZ) *Column 2, lines 7-26,66-68; column 3, lines 1-22,32-39; claims; figures 1-7* | 1-9 | TECHNICAL FIELDS SEARCHED (Int. Cl. ³) A 47 G G 09 F |
| A | FR-A-2 367 458 (VITRAC) *Claims; Figures* | 1-9 | |
| A | FR-A-2 038 881 (FALCONCRAFT) *Page 4, lines 4-6,18-29; figure 1* | 1-6,9 | |
| A | FR-A-1 557 554 (DRAKARD) *Figures 9A-9C* | 1-6,9 | |

-/-

The present search report has been drawn up for all claims

| Place of search | Date of completion of the search | Examiner |
|---|---|---|
| THE HAGUE | 11-10-1982 | BOURSEAU A.M. |

EPO Form 1503. 03 82

0068885

European Patent
Office

EUROPEAN SEARCH REPORT

Application number

EP 82 30 3402

## DOCUMENTS CONSIDERED TO BE RELEVANT

| Category | Citation of document with indication. where appropriate, of relevant passages | Relevant to claim | CLASSIFICATION OF THE APPLICATION (Int. Cl. ³) |
|---|---|---|---|
| A | DE-A-2 623 752 (KENRICK) *Page 2, 2 last paragraphs; page 3; page 4; 2 first paragraphs; figure 1* | 5,6 | |
| | ----- | | |

TECHNICAL FIELDS
SEARCHED (Int. Cl. ³)

The present search report has been drawn up for all claims

| Place of search | Date of completion of the search | Examiner |
|---|---|---|
| THE HAGUE | 11-10-1982 | BOURSEAU A.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82